# FASCICULE DE BREVET EUROPEEN

(11) **EP 2 009 259 B1**
(45) Date de publication et mention de la délivrance du brevet: **04.04.2012**
(21) Numéro de dépôt: 07301155.3
(22) Date de dépôt: 27.06.2007
(51) Int. Cl.: F02B 61/04, F01P 3/20

(54) **Kit de marinisation d'un moteur a combustion interne**
Satz zum Meerestauglichmachen eines Verbrennungsmotors
Marine adaptation kit for an internal combustion engine

(43) Date de publication de la demande: 31.12.2008
(73) Titulaire: Nanni Industries, 33260 La Teste de Buch (FR)
(72) Inventeur: Udovicic, Giani, 33470, Gujan Mestras (FR)
(74) Mandataire: Fantin, Laurent

(56) Documents cités:
- FR-A- 2 199 798
- FR-A- 2 571 430
- US-A1- 2006 096 555

## Description

La présente invention concerne un kit de marinisation d'un moteur à combustion interne applicable à des moteurs développés pour des véhicules terrestres. Un tel kit est connue par le document FR 2 571 430 A.

La présente invention concerne plus particulièrement les moteurs ayant des puissances supérieures à 50 CV par litre de cylindrée moteur. Plus particulièrement l'exemple retenu trouve une application immédiate sur un moteur de 3 litres de cylindrée à 4 cylindres, et de façon encore plus particulière sur le moteur à rampe commune de la série 1KD, produit par la société TOYOTA®.

Les blocs moteur sont conçus par des motoristes pour des véhicules terrestres qui disposent des flux d'air générés lors de leurs déplacements pour assurer un refroidissement du liquide de refroidissement moteur grâce à un échangeur eau/air. La ligne d'échappement est extérieure au véhicule sans aucun confinement et refroidie également par la circulation de l'air sans pouvoir provoquer un échauffement local.

Durant les phases de fonctionnement moteur sans déplacement du véhicule, donc sans circulation d'air, des moyens de ventilation assurent une circulation de l'air à travers l'échangeur pour refroidir le liquide de refroidissement moteur.

Dans le cas des moteurs marins, le refroidissement des moteurs, en particulier les moteurs in-board, est obtenu à travers des échangeurs eau/eau.

Dans le cas de l'eau de mer, le passage de l'eau du milieu extérieur directement dans le circuit de refroidissement du bloc moteur engendrerait des dommages, notamment une corrosion rapide et il est toujours fait appel à un échangeur.

La conception de blocs de moteurs in-board qui présentent des capacités de résistance à la corrosion coûterait très cher et limiterait la diversité de l'offre alors que la marinisation des moteurs pour véhicules terrestres permet une utilisation des moteurs tels quels avec tous les avantages liés à leur fiabilité, à leur entretien, aux réseaux de pièces détachées etc....

Dans les catégories des puissances concernées par la présente invention, supérieure à 50 CV/litre de cylindrée, la marinisation est une solution très intéressante pour les fabricants de moteurs pour véhicules terrestres qui peuvent intégrer le marché du nautisme et pour les fabricants de bateaux qui peuvent disposer d'un grand choix de motorisations pour répondre aux demandes du marché.

La marinisation d'un moteur in-board vise à assurer le refroidissement des différents fluides du moteur et des organes susceptibles d'être portés à de hautes températures dans un espace confiné.

Plus précisément, un kit de marinisation vise à refroidir :
- le liquide de refroidissement moteur par l'eau douce ou l'eau de mer dite eau extérieure avec un échangeur eau/eau, et
- l'air d'admission moteur issu du turbocompresseur dont sont équipés les moteurs concernés par la présente invention, ceci avec un échangeur gaz d'admission /eau douce ou eau de mer suivant le lieu de navigation.

Le kit de marinisation vise aussi à refroidir le collecteur d'échappement et les tubulures d'échappement dans la partie portée à haute température.

En plus des deux échangeurs, le kit inclut un vase d'expansion du liquide de refroidissement moteur ainsi que toutes les conduites, durites, tubulures, fixations, joints nécessaires aux raccordements fluides et aux supports mécaniques sur le moteur.

Il convient de rappeler également les contraintes plus particulièrement liées au nautisme.

La fiabilité des motorisations est un objectif essentiel car une panne moteur sur un bateau peut avoir des conséquences fâcheuses, voire tragiques suivant le lieu où la panne se produit et/ou les conditions de navigation à ce moment là. Pour augmenter la fiabilité, moins il y a de pièces, de raccordement fluides, et moins les sources de pannes sont nombreuses.

De plus, certaines opérations d'entretien sur les bateaux ou les éventuelles réparations sont souvent conduites à bord. Or, l'accessibilité reste limitée du fait de l'exiguïté du compartiment moteur et du fait de l'accès souvent limité à telle ou telle pièce à partir de dessus, notamment pour accéder aux éléments disposés sur les faces latérales du moteur. Il convient donc de limiter les pièces à changer et les sources d'intervention tout en améliorant l'accessibilité à ces pièces.

Du fait de l'architecture des structures navigantes et de l'exiguïté des compartiments moteur, le kit de marinisation doit être compact et parfaitement intégré au bloc moteur sans en augmenter les dimensions extérieures ou du moins en les augmentant dans des proportions très limitées.

Plus particulièrement, contrairement aux propulsions du type ligne d'arbre, dans le cas des propulsions du type stern-drive, le moteur est reculé vers le tableau arrière et il faut que les différents composants du kit ne perturbent pas l'agencement dans son architecture.

Enfin, et ceci est la base des qualités d'un kit de marinisation, il faut que ce kit puisse assurer ses fonctions de refroidissement dans toutes les conditions de fonctionnement car un défaut de refroidissement local conduisant à un échauffement trop important peut provoquer un incendie. Or, en nautisme, sachant que les plaisanciers ne sont pas nécessairement des marins aguerris pour circonscrire rapidement l'incendie ou prendre les mesures de sauvetage adaptées, les conséquences peuvent devenir dramatiques.

Une contrainte importante à prendre en compte dans le cas des moteurs concernés par la présente invention, est le niveau de performances très élevées de ces moteurs qui génèrent des zones à très haute température dont il est très difficile d'extraire toutes les calories surtout au vu des contraintes exposées ci-avant.

De fait, la recherche de compacité est un objectif qui rebute souvent les bureaux d'étude, qui est complexe à atteindre et qui n'est pas naturel lorsqu'il y a une puissante génération de calories à dissiper.

La présente invention vise un kit complet de marinisation d'un moteur à combustion interne en vue de son intégration à une structure navigante.

Le kit selon l'invention est compact et avec une architecture qui évite pour une grande part les tubulures, les connections fluides, et plus généralement les sources de fuites.

Le kit selon l'invention est compact sans nuire aux capacités de refroidissement de moteurs performants nonobstant les gradients de température importants entre les différents fluides en présence, ceci en certains points de ces moteurs.

Le kit selon la présente invention est maintenant décrit en détail selon un mode de réalisation particulier, non limitatif, en regard des dessins annexés sur lesquels les différentes figures représentent :
- figure 1 : une vue en élévation latérale gauche d'un moteur équipé de son kit de marinisation,
- figure 2 : une vue en élévation arrière d'un moteur équipé de son kit de marinisation,
- figure 3 : une vue en élévation latérale droite d'un moteur équipé de son kit de marinisation,
- figure 4A : une vue schématique en perspective de dessus du bloc échangeur eau/air du kit de marinisation selon la présente invention, destiné à refroidir l'air issu du turbo compresseur,
- figure 4B : une vue schématique en perspective de dessous du bloc échangeur eau/air du kit de marinisation selon la présente invention, destiné à refroidir l'air issu du turbo compresseur,
- figure 5 : une vue schématique en coupe longitudinale du bloc échangeur eau/air de la figure 4,
- figure 6 : une vue schématique en perspective du bloc échangeur eau/fluide moteur à collecteur d'échappement et vase d'expansion intégrés, du kit de marinisation selon la présente invention, destiné à refroidir le fluide moteur et ledit collecteur,
- figure 7 : une vue en coupe partielle de l'échangeur eau/fluide moteur de la figure 6,
- figure 8 : une vue schématique en perspective de l'arrière de la pièce de fonderie de l'échangeur eau/fluide moteur, et
- figure 9 : une vue schématique en coupe longitudinale de la pièce de fonderie de la figure 8.

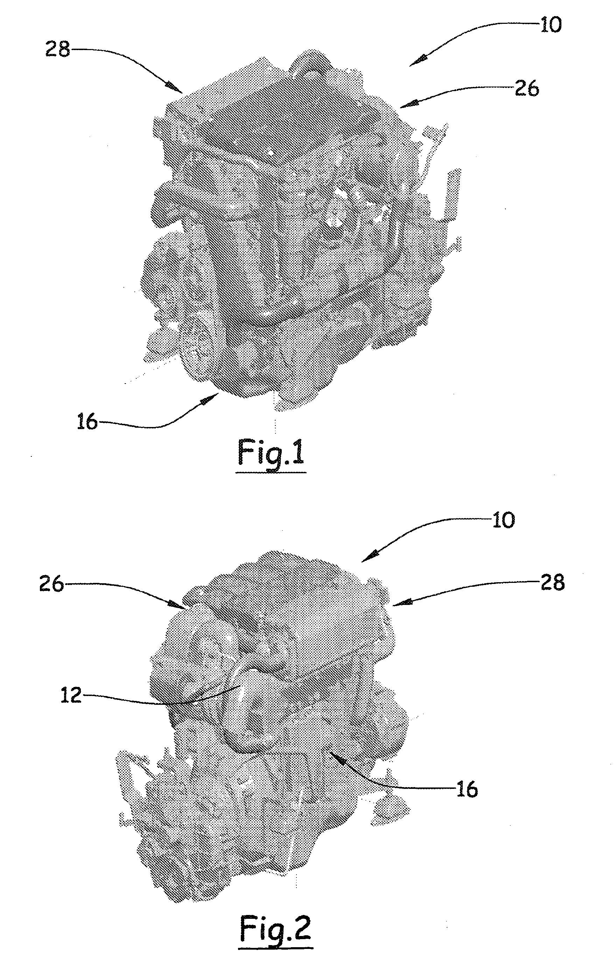

On se reporte sur les figures 1, 2 et 3 qui montrent schématiquement un moteur 10 à combustion interne pour véhicule terrestre tel que marinisé avec le kit selon la présente invention. Un tel moteur est du type à autoallumage et rendu performant par différents moyens existants tels qu'un turbocompresseur 12, une alimentation 14 en carburant diesel sous très haute pression, du type à rampe commune. L'exemple pris est un moteur quatre cylindres tel que le 3 litres de cylindrée, de la série 1KD produit par la société TOYOTA® .

Le bloc moteur 16 dispose d'une sortie mécanique avec un arbre moteur disposé dans une cloche 18 qui coopère mécaniquement avec un inverseur de marche 20.

Le bloc moteur 16 est refroidi avec un liquide de refroidissement, ce liquide étant mis en circulation par une pompe de circulation, ceci de façon connue, comme pour les véhicules terrestres.

Seuls les éléments essentiels du moteur ont été représentés afin de faire ressortir la partie concernée par la présente invention, à savoir le kit de marinisation.

Le kit de marinisation comprend une pompe 22 d'alimentation en eau du milieu extérieur, de l'eau douce ou de l'eau de mer dite "eau extérieure", suivant le lieu de navigation de la structure navigante équipée dudit moteur.

Le kit de marinisation comprend également un premier élément 24 de refroidissement du carburant de retour de l'alimentation, un deuxième élément qui est un échangeur 26 eau/air destiné à refroidir les gaz d'alimentation moteur issus du turbocompresseur, un troisième élément qui est un échangeur 28 eau extérieure/fluide de refroidissement à collecteur d'échappement 30 et vase d'expansion 32 intégrés.

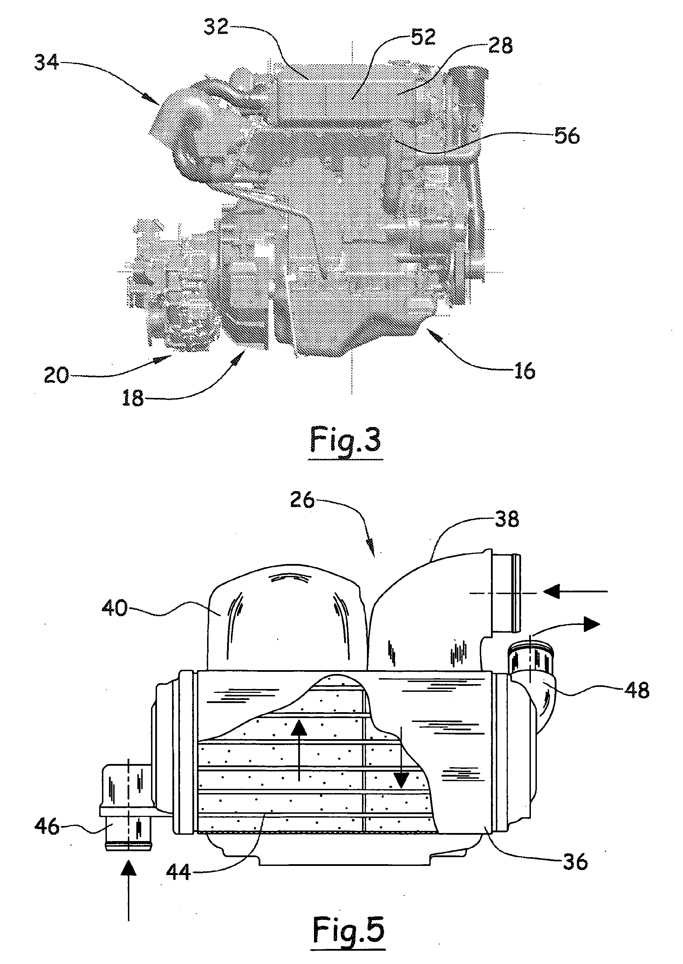

Les gaz d'échappement issus du moteur et passant par le collecteur d'échappement sont conduits à travers un col de cygne 34 visible sur la figure 3, vers l'extérieur et dans le cas d'un bateau généralement dans un silencieux d'échappement, non représenté avant rejet dans le milieu extérieur.

Dans le but de réaliser les deuxième et troisième éléments très compacts, la présente invention propose une architecture très particulière qui est maintenant détaillée en regard des figures concernées.

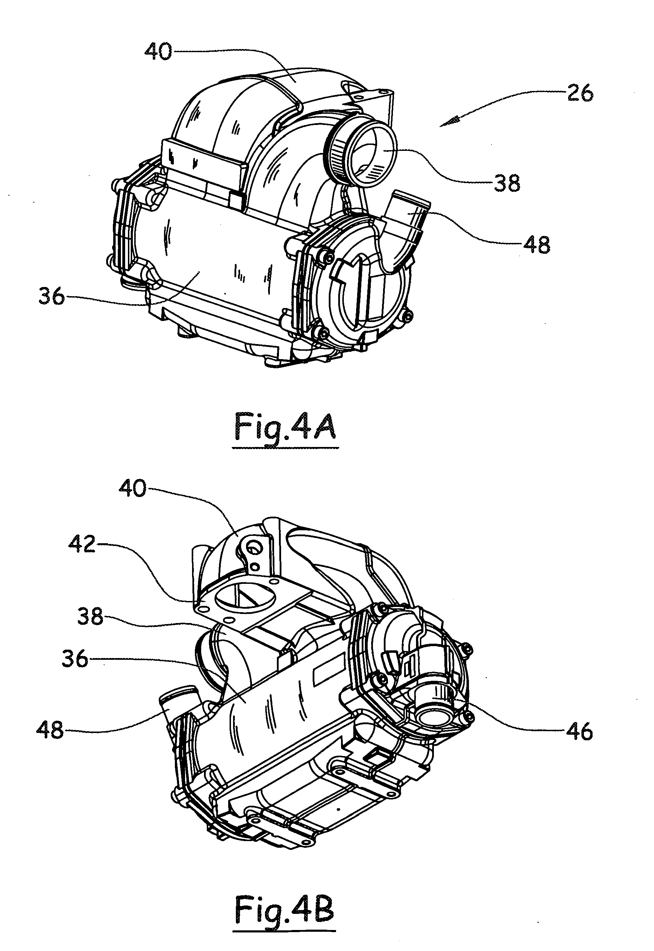

Le deuxième élément 26, ainsi que montré sur les figures 4 et 5, comprend un corps 36 de circulation de l'air issu du turbocompresseur qui entrent par le conduit 38 d'entrée de l'échangeur eau/air et qui circulent dans ce corps pour sortir par le conduit 40 d'alimentation, prévu pour être relié directement à l'alimentation du moteur par une bride 42.

Le corps 36 inclut des tubes 44 d'échange dans lesquels circule l'eau extérieure sous l'action de la pompe 22. L'eau extérieure entre par le conduit 46 d'entrée d'eau extérieure et sort par le conduit 48 de sortie de l'eau extérieure.

L'eau circule à contrecourant du flux gazeux. La température du flux gazeux est de l'ordre de 150°C en entrée par le conduit 38 d'entrée de l'échangeur eau/air et donc issus du turbocompresseur pour être ramenée à 50°C en entrée de l'alimentation moteur à travers le conduit 40 d'alimentation. Ce delta de températures des gaz provoque une très faible élévation de température de l'eau extérieure en sortie du conduit 48 de sortie de l'eau extérieure.

Les pièces de circulation de l'eau extérieure sont en bronze de façon à résister à la corrosion, notamment quand l'eau extérieure est de l'eau de mer.

De même, des chicanes de circulation du flux gazeux disposées dans le corps de l'échangeur eau/air permettent d'optimiser la circulation à travers les tubes 44 d'échange et donc le transfert des calories. En effet, il est possible de prévoir une chicane générant une circulation en U par exemple.

On note la compacité de l'architecture de cet échangeur et les angles des conduits 38 d'entrée de l'échangeur eau/air et 40 d'alimentation qui limitent fortement les pertes de charge. Les entrée et sortie sont parfaitement alignées sur le dessus du corps mais avec la direction du flux gazeux d'entrée et la direction du flux de sortie perpendiculaires. La géométrie des conduits 38 et 40 et leur agencement limitent fortement les effets de vortex et les écoulements trop turbulents, ce qui contribue donc à limiter les pertes de charge.

Si l'on retient la configuration en U, la circulation du flux gazeux d'abord du haut vers le bas puis du bas vers le haut en traversant perpendiculairement les tubes 44 d'échange permet d'assurer un excellent échange thermique tout en perturbant la circulation gazeuse de façon limitée.

La longueur de l'échangeur 26 eau/air et son diamètre sont tels que cet échangeur 26 reste dans l'épure de l'encombrement moteur.

L'échangeur 26 eau/air présente aussi l'intérêt d'être un coude puisque l'eau extérieure arrive suivant une direction parallèle à l'axe longitudinal moteur et sort dans une direction transversale à l'axe longitudinal moteur, en limitant là aussi les pertes de charge.

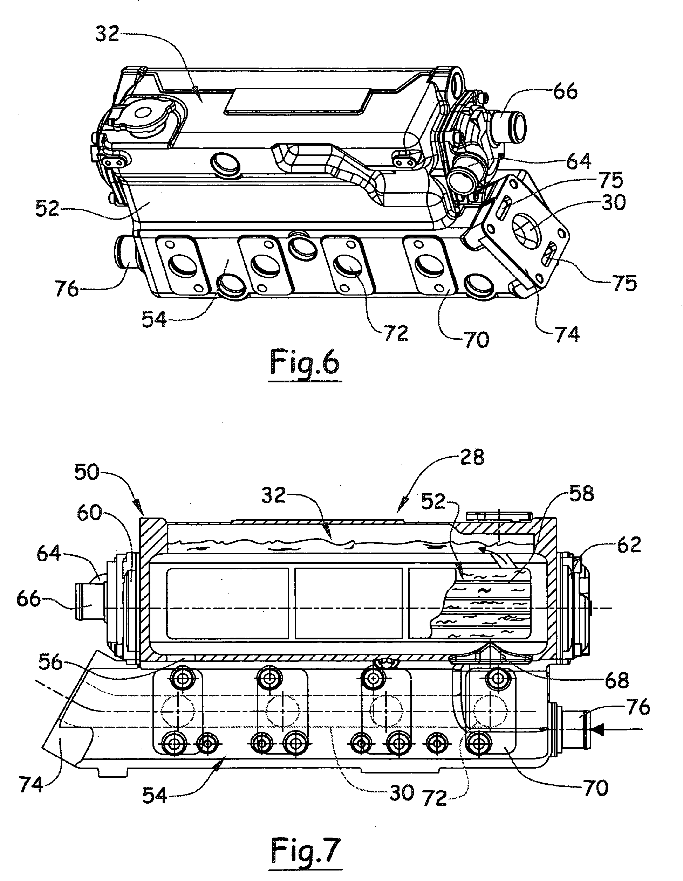

L'échangeur 28 eau extérieure/fluide de refroidissement, à collecteur d'échappement 30 et vase d'expansion 32 intégrés selon la présente invention, est maintenant décrit en détail, plus particulièrement en regard des figures 6 à 9

L'échangeur 28 eau extérieure/fluide de refroidissement à collecteur d'échappement 30 et vase d'expansion 32 intégrés, comprend un bloc 50 monolithique comprenant une chambre 52 haute et une chambre 54 basse.

La chambre 52 haute est équipée d'un conduit 56 d'entrée du liquide de refroidissement moteur.

Cette chambre 52 haute dispose à sa partie supérieure d'une cloison 57 délimitant un petit volume en partie haute du moteur afin de l'utiliser comme vase d'expansion 32. Cette paroi 57 comporte un trou de communication pour permettre le passage de liquide de refroidissement en excès dans le circuit de refroidissement moteur comme il sera expliqué plus avant.

Cette chambre 52 haute est traversée par des tubes 58 d'échange dans lesquels circule l'eau extérieure. Ces tubes sont montés entre deux embases 60/62 d'extrémité, la première embase 60 comportant un conduit 64 d'entrée de l'eau extérieure et un conduit 66 de sortie de l'eau extérieure après circulation à travers les tubes 58 d'échange, en aller et retour.

Le conduit 64 d'entrée de l'eau extérieure de l'échangeur 28 est lié directement au conduit 48 de sortie de l'eau extérieure de l'échangeur 26 eau/air par une simple durite, courte, parfaitement accessible par le dessus du moteur, l'eau extérieure circulant à une température faiblement élevée de l'ordre de 25°C pour donner un ordre de grandeur.

Cette chambre 52 haute comporte avantageusement des chicanes adaptées pour faire circuler le fluide de refroidissement qui entre par le passage 56 en provenance de la chambre 54 basse, ceci avec la meilleure efficacité à travers les tubes 58 d'échange, de façon à refroidir au mieux le fluide ayant accumulé toutes les calories issus du bloc moteur 16 et issues de la chambre 54 basse et du refroidissement du collecteur comme indiqué ci-après.

Cette chambre 52 haute est elle-même munie d'un conduit 68 de sortie de ce liquide de refroidissement, après abaissement de sa température, vers la pompe de circulation, non représentée. Des moyens de limitation de la circulation du liquide de refroidissement peuvent être interposés sur le circuit afin de contrôler la température et de la maintenir à une valeur de consigne lors du fonctionnement.

La chambre 54 basse inclut le collecteur 30 d'échappement et forme une double enveloppe. Ainsi chaque bride 70 de tubulure 72 d'échappement est usinée directement sur la paroi extérieure de cette chambre 54 basse afin de permettre la réalisation des étanchéités aux gaz entre la culasse du bloc moteur et chaque tubulure 72 d'échappement.

Le collecteur 30 lui-même est solidaire d'une bride 74 commune d'évacuation des gaz collectés. Cette bride 74 comporte des passages 75 de liquide de refroidissement de façon à refroidir la partie turbo compresseur.

Le collecteur 30 baigne ainsi dans le liquide de refroidissement circulant, introduit dans la chambre 54 basse en provenance du bloc moteur 16. Le liquide de refroidissement entre par un conduit 76 d'entrée du liquide de refroidissement.

La chambre 54 basse comporte avantageusement des chicanes de façon à réaliser un écoulement optimisé et une extraction d'une grande partie des calories générées par les tubulures 72 d'échappement et le collecteur 30.

Pour les moteurs à haute performance concernés par la présente invention, compte tenu des températures très élevées, de l'ordre de 650 à 700°C, en sortie de culasse, au droit des tubulures 72 d'échappement, il convient de renforcer les épaisseurs de paroi localement, de façon à éviter les formations de criques susceptibles de dégrader les tubulures tout en autorisant le meilleur échange thermique.

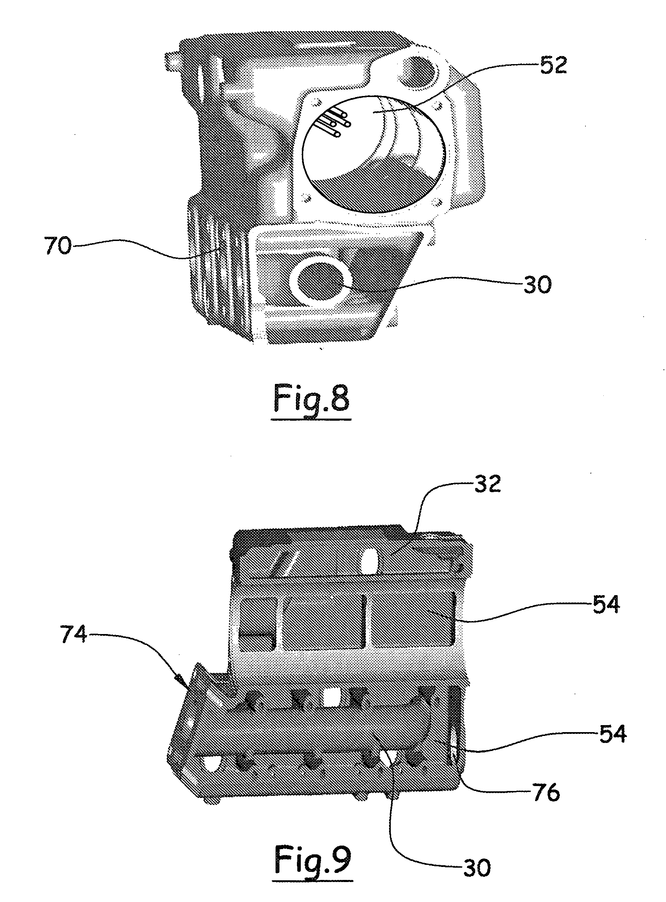

Surtout, la présente invention prévoit la réalisation de l'ensemble des deux chambres, du vase à expansion, des tubulures d'échappement et du collecteur en une seule pièce de fonderie, en aluminium. Cette pièce est représentée en coupe longitudinale et en perspective sur les figures 8 et 9.

On constate la compacité de l'agencement.

Du fait de l'agencement selon l'invention, le collecteur et les tubulures sont refroidies par le liquide de refroidissement et non par l'eau extérieure donc sans risque de corrosion par l'eau de mer comme cela peut exister dans le cas du refroidissement direct de l'échappement par l'eau de mer.

Ainsi, l'eau extérieure entre par le conduit 64 d'entrée en provenance de l'échangeur 26, passe dans les tubes 58 d'échange puis ressort par le conduit 66 de sortie.

Les pièces de circulation de l'eau extérieure sont par contre en bronze de façon à résister à la corrosion, notamment quand l'eau extérieure est de l'eau de mer.

Dans certains cas, l'eau extérieure en sortie de l'échangeur 28 peut être utilisée pour le refroidissement d'un organe complémentaire comme le refroidisseur d'huile d'inverseur.

Le liquide de refroidissement entre par le conduit 76 d'entrée de la chambre 54 basse circule dans cette chambre afin de refroidir les tubulures 72 d'échappement et le collecteur 30.

Le liquide de refroidissement qui s'élève en température du fait des calories collectées, de l'ordre de 5°C, sort de cette chambre 54 basse à travers le passage 56 et circule dans la chambre 52 haute à travers les tubes 58 d'échange de façon à transférer les calories accumulées à l'eau extérieure.

Le liquide de refroidissement est alors ramené à une température de 75°C pour donner un ordre d'idées, en sortie du conduit 68 de sortie, avant son retour dans le circuit de refroidissement.

Entre le moment ou le moteur est froid et le moment où le moteur atteint sa température de fonctionnement, l'augmentation de la température provoque une mise en pression et le vase 32 d'expansion permet de compenser ces variations de volume.

A cet effet et de façon connue, le vase 32 d'expansion qui est à froid partiellement rempli de liquide de refroidissement, est équipé d'un bouchon 78 taré permettant d'évacuer toute surpression d'air trop importante en fonctionnement et d'éviter toute dépression trop importante à l'arrêt dans le circuit de refroidissement en cas de température très froide par exemple. Le liquide de refroidissement est une composition antigel bien entendu mais il subit des dilatations et des contractions avec de forts gradients.

On constate que l'agencement selon l'invention permet au kit selon la présente invention tout d'abord de diminuer grandement le nombre de durites dont on sait qu'elles sont source d'entretien voire de panne en cas de mauvais entretien. Les durites sont en élastomère armé qui au cours du temps durci et perd certaines propriétés au point de montrer des craquelures qui à terme occasionnent des fuites.

Il faut noter que des colliers de serrage nécessaires pour le montage de ces durites peuvent aussi se casser ou pour le moins engendrer des fuites souvent difficilement accessibles.

En corollaire, les pertes de charge liées à ces durites supprimées sont elles mêmes éliminées.

La compacité des deux échangeurs, notamment de l'échangeur eau extérieure/liquide de refroidissement par intégration de trois éléments en un seul permet d'obtenir un encombrement moteur réduit.

Ainsi, le kit de marinisation sur un même moteur permet, par rapport à des agencements de l'art antérieur, des gains de plusieurs centimètres dans les deux dimensions et des gains de poids substantiels.

## Revendications

1. Kit de marinisation d'un moteur (10) à combustion interne, notamment du type à autoallumage, à rampe commune et turbocompresseur (12), ce moteur comprenant un bloc moteur (16) refroidi par un liquide de refroidissement mis en circulation par une pompe de circulation, une pompe (22) d'alimentation en eau du milieu extérieur et un échangeur (28) eau extérieure/fluide de refroidissement à collecteur d'échappement (30) et vase d'expansion (32) intégrés et comprenant un conduit d'entrée (64) de l'eau extérieure dans l'échangeur eau extérieure/fluide de refroidissement(28), **caractérisé en ce qu'**il comprend au moins un échangeur (26) eau extérieure/air destiné à refroidir les gaz d'alimentation moteur et comprenant un conduit de sortie (48) de l'eau extérieure hors de l'échangeur eau extérieure/air, le conduit d'entrée (64) de l'échangeur (28) eau extérieure/fluide de refroidissement étant directement lié au conduit de sortie (48) de l'échangeur (26) eau extérieure/air.

2. Kit de marinisation d'un moteur (10) à combustion interne selon la revendication 1, **caractérisé en ce que** l'échangeur (26) eau extérieure/air destiné à refroidir les gaz d'alimentation moteur comprend un corps (36) de circulation de l'air d'alimentation, un conduit (38) d'entrée d'air de l'échangeur eau/air et un conduit (40) d'alimentation, prévu pour être relié directement à l'alimentation dudit moteur par une bride (42).

3. Kit de marinisation d'un moteur (10) à combustion interne selon la revendication 2, **caractérisé en ce que** le corps (36) de l'échangeur (26) eau/air inclut des tubes (44) d'échange dans lesquels circule l'eau extérieure, un conduit (46) d'entrée d'eau extérieure et le conduit (48) de sortie de cette eau extérieure.

4. Kit de marinisation d'un moteur (10) à combustion interne selon l'une quelconque des revendications précédentes, **caractérisé en ce que** l'échangeur (28) eau extérieurs/fluide de refroidissement comporte un bloc (50) monolithique comprenant une chambre (52) haute avec une cloison (57) à sa partie supérieure, délimitant un volume en partie haute du moteur constituant le vase d'expansion (32) et une chambre (54) basse incluant le collecteur d'échappement (30) et ses tubulures (72).

5. Kit de marinisation d'un moteur (10) à combustion interne selon la revendication 4, **caractérisé en ce que** la chambre (52) haute est traversée par des tubes (58) d'échange dans lesquels circule l'eau extérieure, montés entre deux embases (60/62) d'extrémité, la première embase (60) comportant le conduit (64) d'entrée de l'eau extérieure et un conduit (66) de sortie de l'eau extérieure après circulation à travers lesdits tubes (58) d'échange.

6. Kit de marinisation d'un moteur (10) à combustion interne selon la revendication 4 ou 5, **caractérisé en ce que** la chambre (54) basse inclut le collecteur (30), les brides (70), les tubulures (72) d'échappement venu de fabrication avec ladite chambre (54).

7. Kit de marinisation d'un moteur (10) à combustion interne selon la revendication 6, **caractérisé en ce que** le collecteur (30) est solidaire d'une bride (74) commune d'évacuation des gaz collectés, comportant des passages (75) de liquide de refroidissement.

8. Kit de marinisation d'un moteur (10) à combustion interne selon l'une des revendications 4 à 7, **caractérisé en ce que** la chambre basse (54) comporte un conduit (76) d'entrée de liquide de refroidissement et la chambre haute (52) comprend un conduit (68) de sortie.

9. Kit de marinisation d'un moteur (10) à combustion interne selon l'une des revendications 4 à 8, **caractérisé en ce que** le bloc monolithique (50) constituant la chambre haute (52), la chambre basse (54) et le vase à expansion (32) est venu de moulage, en aluminium.

## Claims

1. A kit for the marine adaptation of an internal combustion engine (10), in particular of the auto-ignition type, with a common pipe and a turbocompressor (12), this engine comprising an engine block (16) cooled by a cooling liquid circulated by a circulation pump, a pump (22) supplying water from the external environment and an external water/cooling-fluid exchanger (26) with integral exhaust manifold (30) and expansion tank (32), and comprising an inlet conduit (64) for the external water into the external water/cooling-fluid exchanger (28), **characterised in that** it comprises at least one external water/air exchanger (26) intended to cool the engine feed gases and comprising an outlet conduit (48) for the external water out of the external water/air exchanger, the inlet conduit (64) of the external water/cooling-fluid exchanger (28) being directly connected to the outlet conduit (48) of the external water/air exchanger (26).

2. A kit for the marine adaptation of an internal combustion engine (10) according to claim 1, **characterised in that** the external water/air exchanger (26) intended to cool the engine feed gases comprises a feed air circulation body (36), an air inlet conduit (38) of the water/air exchanger and a feed conduit (40) designed to be connected directly to the supply of said engine by a flange (42).

3. A kit for the marine adaptation of an internal combustion engine (10) according to claim 2, **characterised in that** the body (36) of the water/air exchanger (26) includes exchange tubes (44) in which the external water circulates, an external water inlet conduit (46) and the outlet conduit (48) for this external water.

4. A kit for the marine adaptation of an internal combustion engine (10) according to any one of the preceding claims, **characterised in that** the external water/cooling-fluid exchanger (28) comprises a monolithic block (50) comprising a top chamber (52) with a partition (57) at the top part thereof, delimiting a space at the top part of the engine constituting the expansion tank (32), and a bottom chamber (54) including the exhaust manifold (30) and the pipes (72) thereof.

5. A kit for the marine adaptation of an internal combustion engine (10) according to claim 4, **characterised in that** the top chamber (52) has exchange tubes (58) passing through it in which the external water circulates, between two end bases (60/62), the first base (60) comprising the external water inlet conduit (64) and an outlet conduit (66) for the external water after circulation through said exchange tubes (58).

6. A kit for the marine adaptation of an internal combustion engine (10) according to claim 4 or 5, **characterised in that** the bottom chamber (54) includes the manifold (30), the flanges (70), and the exhaust pipers (72) made in one piece with said chamber (54).

7. A kit for the marine adaptation of an internal combustion engine (10) according to claim 6, **characterised in that** the manifold (30) is secured to a common flange (74) for discharging the gases collected, comprising cooling-liquid passages (75).

8. A kit for the marine adaptation of an internal combustion engine (10) according to one of claims 4 to 7, **characterised in that** the bottom chamber (54) comprises a cooling-liquid inlet conduit (76) and the top chamber (52) comprises an outlet conduit (68).

9. A kit for the marine adaptation of an internal combustion engine (10) according to one of claims 4 to 8, **characterised in that** the monolithic block (50) constituting the top chamber (52), the bottom chamber (54) and the expansion tank (32) is cast in aluminium.

## Patentansprüche

1. Ausrüstsatz, um eine Brennkraftmaschine (10), insbesondere des Selbstzündungstyps mit Common Rail und Turbokompressor (12), seetauglich zu machen, wobei diese Maschine einen Motorblock (16), der durch eine Kühlflüssigkeit gekühlt wird, die durch eine Umwälzpumpe umgewälzt wird, eine Pumpe (22) für die Versorgung mit Wasser von dem äußeren Medium und einen Tauscher (28) zwischen äußerem Wasser und Kühlflüssigkeit, der einen Abgassammler (30) und ein Ausdehnungsgefäß (32), die integriert sind, sowie eine Eingangsleitung (64) für das äußere Wasser in den Tauscher für äußeres Wasser und Kühlflüssigkeit (28) enthält, umfasst, **dadurch gekennzeichnet, dass** er wenigstens einen Tauscher (26) für äußeres Wasser und Luft für die Kühlung der Maschinenversorgungsgase umfasst, der eine Ausgangsleitung (48) für äußeres Wasser aus dem Tauscher für äußeres Wasser und Luft enthält, wobei die Eingangsleitung (64) des Tauschers (28) für äußeres Wasser und Kühlungsfluid direkt mit der Ausgangsleitung (48) des Tauschers (26) für äußeres Wasser und Luft verbunden ist.

2. Ausrüstsatz, um eine Brennkraftmaschine (10) seetauglich zu machen, nach Anspruch 1, **dadurch gekennzeichnet, dass** der Tauscher (26) für äußeres Wasser und Luft für die Kühlung der Maschinenversorgungsgase einen Körper (36) für die Umwälzung von Versorgungsluft, eine Lufteinlassleitung (38) des Tauschers für Wasser und Luft und eine Versorgungsleitung (40), die vorgesehen ist, um direkt mit der Versorgung der Maschine durch einen Flansch (42) verbunden zu werden, umfasst.

3. Ausrüstsatz, um eine Brennkraftmaschine (10) seetauglich zu machen, nach Anspruch 2, **dadurch gekennzeichnet, dass** der Körper (36) des Tauschers (26) für Wasser und Luft Austauschrohre (44), in denen äußeres Wasser zirkuliert, eine Einlassleitung (46) für äußeres Wasser und die Auslassleitung (48) für dieses äußere Wasser umfasst.

4. Ausrüstsatz, um eine Brennkraftmaschine (10) seetauglich zu machen, nach einem der vorhergehenden Ansprüche, **dadurch gekennzeichnet, dass** der Tauscher (28) für äußeres Wasser und Kühlungsfluid einen monolithischen Block (50) umfasst, der eine obere Kammer (52) mit einer Trennwand (57) in ihrem oberen Teil, die ein Volumen im oberen Teil der Maschine begrenzt, das das Ausdehnungsgefäß (32) bildet, und eine untere Kammer (54), die den Abgassammler (30) und dessen Verrohrungen (72) enthält, umfasst.

5. Ausrüstsatz, um eine Brennkraftmaschine (10) seetauglich zu machen, nach Anspruch 4, **dadurch gekennzeichnet, dass** durch die obere Kammer (52) Austauschrohre (58) verlaufen, in denen äußeres Wasser zirkuliert und die zwischen zwei Stirnsitzfiächen (60, 62) montiert sind, wobei die erste Sitzfläche (60) die Einlassleitung für äußeres Wasser (64) und die Auslassleitung für äußeres Wasser nach der Zirkulation durch die Austauschrohre (58) umfasst.

6. Ausrüstsatz, um eine Brennkraftmaschine (10) seetauglich zu machen, nach Anspruch 4 oder 5, **dadurch gekennzeichnet, dass** die untere Kammer (54) den Sammler (30), die Flansche (70) und die Abgasverrohrungen (72), die zusammen mit der Kammer (54) gefertigt werden, enthält.

7. Ausrüstsatz, um eine Brennkraftmaschine (10) seetauglich zu machen, nach Anspruch 6, **dadurch gekennzeichnet, dass** der Sammler (30) mit einem Flansch (74) fest verbunden ist, der für die Abführung gesammelter Gase vorgesehen ist und Kühlungsflüssigkeitsdurchlässe (75) aufweist.

8. Ausrüstsatz, um eine Brennkraftmaschine (10) seetauglich zu machen, nach einem der Ansprüche 4 bis 7, **dadurch gekennzeichnet, dass** die untere Kammer (54) eine Einlassleitung (76) für Kühlungsflüssigkeit enthält und die obere Kammer (52) eine Auslassleitung (68) enthält.

9. Ausrüstsatz, um eine Brennkraftmaschine (10) seetauglich zu machen, nach einem der Ansprüche 4 bis 8, **dadurch gekennzeichnet, dass** der die obere Kammer (52), die untere Kammer (54) und das Ausdehnungsgefäß (32) bildende monolithische Block (50) aus Aluminium gegossen ist.
